# EUROPÄISCHE PATENTSCHRIFT

(11) **EP 1 854 740 B1**
(45) Veröffentlichungstag und Bekanntmachung des Hinweises auf die Patenterteilung: **28.04.2010**
(21) Anmeldenummer: 07105460.5
(22) Anmeldetag: 02.04.2007
(51) Int. Cl.: B65D 85/804

(54) **Filter**
Filter
Filtre

(30) Priorität: 11.05.2006 DE 202006007630 U; 16.05.2006 DE 202006007829 U
(43) Veröffentlichungstag der Anmeldung: 14.11.2007
(73) Patentinhaber: MELITTA HAUSHALTSPRODUKTE GmbH & Co. Kommanditgesellschaft, D-32427 Minden (DE)
(72) Erfinder: Lötzsch, Rebecca, 32423 Minden (DE); Rohde, Florian, 32427 Minden (DE)
(74) Vertreter: Dantz, Jan Henning

(56) Entgegenhaltungen:
- DE-U1-202005 005 474
- GB-A- 2 419 805

## Beschreibung

Die vorliegende Erfindung betrifft einen Filter, mit einem aus mindestens zwei Filterschichten gebildeten Filterkörper, in dem eine im Wesentlichen scheibenförmige Aufnahme zur Befüllung mit Kaffeepulver oder Tee vorgesehen ist.

Aus der DE 20 2005 005474 ist ein Beutel zur Aufnahme von Brühgut bekannt, bei dem eine im Wesentlichen scheibenförmige Aufnahme zur Aufnahme von Kaffeepulver ausgebildet ist. An diese Aufnahme schließt sich ein hervorstehender Einfülltrichter an, der zum Verschließen umklappbar ist. Nachteilig bei diesem Filter ist, dass das Einfüllen durch den hervorstehenden Einfülltrichter vergleichsweise mühsam ist und zudem nur eine kleine Einfüllöffnung vorgesehen ist. Zwar lässt sich die Einfüllöffnung durch Umklappen des hervorstehenden Einfülltrichters leicht verschließen, allerdings kann schon beim Befüllen Kaffeemehl verschüttet werden, was die Akzeptanz dieses Filters nachteilig beeinflusst.

Es ist daher Aufgabe der vorliegenden Erfindung einen Filter für ein Brühgetränk zu schaffen, der einfach aufgebaut ist und eine einfache Handhabung ermöglicht.

Diese Aufgabe wird mit einem Filter mit den Merkmalen des Anspruches 1 gelöst.

Erfindungsgemäß ist eine erste Filterschicht nur über einen Teil des Umfanges mit der benachbarten zweiten Filterschicht verbunden, so dass eine klappbare Lasche ausgebildet ist, wobei die Lasche in eine Tasche an der zweiten Filterschicht einfügbar ist. Dadurch kann eine vergleichsweise große Einfüllöffnung zwischen der ersten Filterschicht und der zweiten Filterschicht durch die klappbare Lasche ausgebildet sein, die dann auf einfache Weise verschließbar ist, in dem die Lasche in die Tasche eingefügt wird. Dabei ist es nicht notwendig, eine 100%ige Abdichtung zu erreichen, vielmehr muss gewährleistet sein, dass während des nachfolgenden Brühvorganges kein Kaffeemehl nach außen tritt. Dies kann durch ein loses Einstecken der Lasche in die Tasche jedoch erreicht werden.

Gemäß einer bevorzugten Ausgestaltung der Erfindung weist die Tasche etwa dieselbe Größe wie die klappbare Lasche auf. Dadurch können die Filter auf einfache Weise in einer Kassette übereinander gestapelt werden, wobei eine scheibenförmige flache Form wenig Stauraum benötigt. Zum Befüllen muss dann lediglich die Lasche nach oben geklappt werden so dass die Aufnahme zugänglich ist.

Für eine einfache Herstellung des Filters ist die Tasche durch einen Filtermaterialabschnitt gebildet, der im Umfang mit der zweiten Filterschicht verbunden ist. Die Tasche kann dabei so ausgebildet sein, dass eine Faltkante der Lasche benachbart zu einem Öffnungsrand der Tasche angeordnet ist. Dadurch kann die Lasche nahezu vollständig in die Tasche aufgenommen werden. Der Öffnungsrand kann dabei geradlinig ausgebildet sein, so dass bei einer Befüllung der Aufnahme mit Kaffeemehl eine klemmende Festlegung der Lasche in der Tasche ermöglicht wird.

Der Filter besteht vorzugsweise aus Papier, das randseitig am Umfang zur Verbindung der Filterschichten miteinander verprägt sein kann. Dies ermöglicht eine kostengünstige Herstellung. Es ist natürlich auch möglich, ein anderes Filtermaterial, beispielsweise einen Vliesstoff einzusetzen.

Vorzugsweise sind die Filterschichten aus einem heißsiegelfähigem Material hergestellt. Dabei können die Filterschichten eine Außenschicht aus einem Papiermaterial und eine Innenschicht aus einem siegelfähigem Kunststoffmaterial aufweisen. Eine solche Filterschicht lässt sich bei der Herstellung des Filters besonders einfach und kostengünstig verarbeiten.

Die Erfindung wird nachfolgend anhand eines Ausführungsbeispieles mit Bezug auf die beigefügten Zeichnungen näher erläutert. Es zeigen:

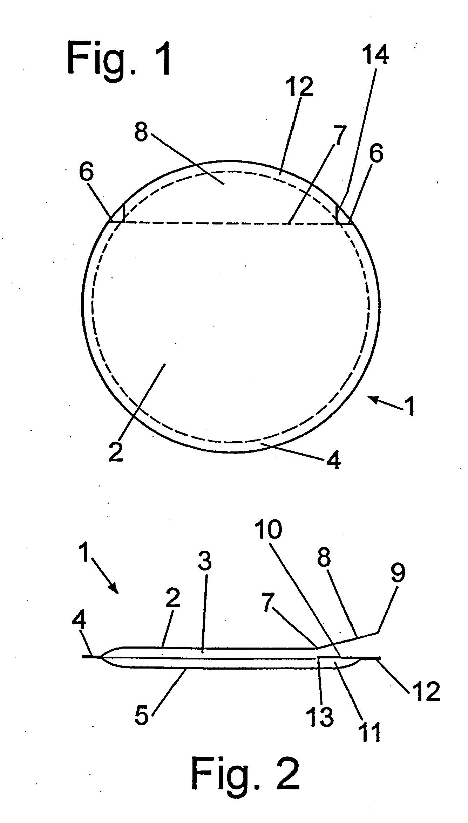

- Figur 1: Eine Draufsicht auf einen erfindungsgemäßen Filter, und
- Figur 2: eine geschnittene Seitenansicht auf den Filter der Figur 1.

Ein Filter 1 umfasst eine scheibenförmige Filterschicht 2, die benachbart zu einer scheibenförmigen zweiten Filterschicht 5 angeordnet ist, wobei die Filterschichten 2 und 5 am Umfang über eine Verbindungsnaht 4, beispielsweise eine Siegel- oder Prägenaht miteinander verbunden sind. Die Verbindungsnaht 4 erstreckt sich nicht über den gesamten Umfang, sondern nur über einen Teilbereich bis zu Enden 6 der Prägenaht, die so geordnet sind, dass etwa 10 % bis 40 %, vorzugsweise 20 % bis 30 % des gesamten Umfanges nicht mit einer Verbindungsnaht belegt ist. Mit anderen Worten erstreckt sich die Verbindungsnaht 4 etwas über die Hälfte des Umfanges der scheibenförmigen Filterschichten 2 und 5.

Zwischen den Filterschichten 2 und 5 ist eine scheibenförmige Aufnahme 3 ausgebildet, die mit Kaffeemehl oder Tee befüllt werden kann. Hierfür ist die Filterschicht 2 mit einer klappbaren Lasche 8 versehen, die in dem nicht verbundenen Bereich der Filterschichten 2 und 5 faltbar ist, so dass eine Einfüllöffnung zwischen den Filterschichten 2 und 5 ausgebildet werden kann. Nach dem Befüllen mit Kaffeemehl oder Tee kann der Filter 1 verschlossen werden, in dem die klappbare Lasche 8 in eine Tasche 11 eingesteckt wird. Die Tasche 11 ist durch einen Filtermaterialabschnitt 10 gebildet, der randseitig am Umfang über eine Prägenaht 12 mit der Filterschicht 5 verbunden ist, bis etwa zu den Enden 6. Dadurch verläuft ein Öffnungsrand 13 der Tasche 11 benachbart zu einer Faltkante 7 der Lasche 8, wenn diese umgeklappt und geöffnet ist.

An der Lasche 8 ist an gegenüberliegenden Seiten benachbart zu dem Ende 6 der Verbindungsnaht 4 eine Aussparung 14 vorgesehen, die etwa dreiecksförmig ist und die Breite der Verbindungsnaht 4 besitzt oder geringfügig größer ist, um das Einfügen der Lasche 8 in die Tasche 11 zu erleichtern. Eine Kante der Aussparung 14 erstreckt sich dabei in Verlängerung der Faltkante 7.

Nach dem Befüllen mit Kaffeemehl oder Tee kann der Filter 1 verschlossen werden, in dem die Lasche 8 in die Tasche 11 eingesteckt wird. Dabei liegt ein Rand 9 der Lasche 8 in der Tasche 11 an.

In Draufsicht gesehen ist der Filter 1 scheibenförmig ausgebildet, da die Lasche 8 randseitig mit der unteren Filterschicht 5 abschließt. Im Bereich des Filtermaterialabschnittes 10 sind drei Lagen ausgebildet, im ansonsten sind nur zwei Lagen durch die Filterschichten 2 und 5 ausgebildet.

In dem dargestellten Ausführungsbeispiel ist der Filter 1 mit den Filterschichten 2 und 5 aus einem Papiermaterial hergestellt, wobei auch andere Fluid durchlässige Materialien, wie Vliesstoffe oder mehrschichtige Filtermaterialien eingesetzt werden können. Die Papierschichten können jedoch auf einfache Weise miteinander verbunden werden, in dem sie randseitig miteinander verprägt werden.

Nach einem weiteren Ausführungsbeispiel sind die Filterschichten 2 und 5 mehrlagig ausgebildet und umfassen eine äußere Schicht aus einem Papiermaterial und eine innere Schicht aus einem heißsiegelfähigen Kunststoffmaterial. Eine solche Filterschicht lässt sich bei der Herstellung besonders einfach verarbeiten, indem die beiden Filterschichten 2 und 5 aufeinander gelegt werden und dann randseitig im Bereich der Verbindungsnähte heißgesiegelt werden. An der Innenseite kleben die Filterschichten aneinander fest und an der Außenseite findet keine klebende Verbindung mit der Umgebung statt.

Es ist auch möglich, als Filterschicht eine Mischung aus Papier und Kunststoff, beispielsweise mit entsprechenden Fasern einzusetzen, so dass die Heißsiegelfähigkeit gegeben ist.

Als Materialien für die Filterschichten können Papiere, Vliese, Nylon, PP oder PE eingesetzt werden.

In dem dargestellten Ausführungsbeispiel besitzt die Lasche 8 etwa dieselbe Form wie der Innenraum der Tasche 11, so dass eine gute Festlegung der Lasche 8 ermöglicht wird. Es ist natürlich auch möglich, die Tasche 11 etwas kleiner als die Lasche 8 auszubilden, um ein loseres Einstecken der Lasche 8 zu ermöglichen.

## Patentansprüche

1. Filter (1) mit einem aus mindestens zwei Filterschichten (2, 5) gebildeten Filterkörper, in dem eine im Wesentlichen scheibenförrpige Aufnahme (3) zur Befüllung mit Kaffeepulver oder Tee vorgesehen ist, **dadurch gekennzeichnet, dass** eine erste Filterschicht (2) nur über einen Teil des Umfanges mit der benachbarten zweiten Filterschicht (5) verbunden ist, so dass eine klappbare Lasche (8) ausgebildet ist, und die Lasche (8) in eine Tasche (11) an der zweiten Filterschicht (5) einfügbar ist.

2. Filter nach Anspruch 1, **dadurch gekennzeichnet, dass** die Tasche (11) etwa dieselbe Größe wie die klappbare Lasche (8) aufweist.

3. Filter nach Anspruch 1 oder 2, **dadurch gekennzeichnet, dass** die Tasche (11) durch einen Filtermaterialabschnitt (10) gebildet ist, der am Umfang mit der zweiten Filterschicht (5) verbunden ist.

4. Filter nach einem der Ansprüche 1 bis 3, **dadurch gekennzeichnet, dass** eine Faltkante (7) der Lasche (8) benachbart zu einem Öffnungsrand (13) der Tasche (11) angeordnet ist.

5. Filter nach einem der Ansprüche 1 bis 4, **dadurch gekennzeichnet, dass** die Filterschichten (2, 5) aus Papier hergestellt sind, das zur Verbindung geprägt ist.

6. Filter nach einem der Ansprüche 1 bis 5, **dadurch gekennzeichnet, dass** die Filterschichten (2, 5) aus einem heißsiegelfähigem Material hergestellt sind.

7. Filter nach einem der Ansprüche 1 bis 6, **dadurch gekennzeichnet, dass** die Filterschichten (2, 5) eine Außenschicht aus einem Papiermaterial und eine Innenschicht aus einem siegelfähigem Kunststoffmaterial aufweisen.

## Claims

1. Filter (1) with a filter body which is formed by at least two filter layers (2, 5) and in which a substantially disc-shaped void (3) is provided for filling with coffee powder or tea, **characterized in that** a first filter layer (2) is joined only over part of the periphery to the neighbouring second filter layer (5), so that a folding flap (8) is formed, and the flap (8) can be tucked into a pocket (11) on the second filter layer (5).

2. Filter according to Claim 1, **characterized in that** the pocket (11) is of approximately the same size as the folding flap (8).

3. Filter according to Claim 1 or 2, **characterized in that** the pocket (11) is formed by a portion of filter material (10) which is joined at the periphery to the second filter layer (5).

4. Filter according to one of Claims 1 to 3, **characterized in that** a folding edge (7) of the flap (8) is arranged adjacent to an opening border (13) of the pocket (11).

5. Filter according to one of Claims 1 to 4, **characterized in that** the filter layers (2, 5) are produced from paper which is embossed for joining.

6. Filter according to one of Claims 1 to 5, **characterized in that** the filter layers (2, 5) are produced from a heat-sealable material.

7. Filter according to one of Claims 1 to 6, **characterized in that** the filter layers (2, 5) have an outer layer of a paper material and an inner layer of a sealable plastics material.

## Revendications

1. Filtre (1) avec un corps de filtre formé d'au moins deux couches de filtre (2, 5), dans lequel un logement (3) essentiellement en forme de disque est prévu pour le remplissage en café en poudre ou thé, **caractérisé en ce qu'**une première couche de filtre (2) est reliée uniquement sur une partie de la périphérie à la seconde couche de filtre (5) contiguë de sorte qu'une languette (8) rabattable soit réalisée et la languette (8) puisse être insérée dans une poche (11) sur la seconde couche de filtre (5).

2. Filtre selon la revendication 1, **caractérisé en ce que** la poche (11) présente à peu près la même taille que la languette (8) rabattable.

3. Filtre selon la revendication 1 ou 2, **caractérisé en ce que** la poche (11) est formée d'une partie de matériau filtrant (10) qui est reliée sur la périphérie à la seconde couche de filtre (5).

4. Filtre selon l'une quelconque des revendications 1 à 3, **caractérisé en ce qu'**une arête repliable (7) de la languette (8) est disposée de manière contiguë à un bord d'ouverture (13) de la poche (11).

5. Filtre selon l'une quelconque des revendications 1 à 4, **caractérisé en ce que** les couches de filtre (2, 5) sont fabriquées en papier qui est gaufré pour la liaison.

6. Filtre selon l'une quelconque des revendications 1 à 5, **caractérisé en ce que** les couches de filtre (2, 5) sont fabriquées en un matériau thermosoudable.

7. Filtre selon l'une quelconque des revendications 1 à 6, **caractérisé en ce que** les couches de filtre (2, 5) présentent une couche extérieure en un matériau de papier et une couche intérieure en un matériau plastique soudable.
